# EUROPÄISCHE PATENTSCHRIFT

(11) **EP 3 512 052 B1**
(45) Veröffentlichungstag und Bekanntmachung des Hinweises auf die Patenterteilung: **08.09.2021**
(21) Anmeldenummer: 18185797.0
(22) Anmeldetag: 26.07.2018
(51) Int. Cl.: H01R 13/639, B60L 53/16, B60L 58/12

(54) **VERFAHREN ZUM AUTOMATISCHEN ENTRIEGELN EINER LADEANORDNUNG SOWIE KRAFTFAHRZEUG**
METHOD FOR AUTOMATICALLY UNLOCKING A CHARGING ARRANGEMENT AND MOTOR VEHICLE
PROCÉDÉ DE DÉVERROUILLAGE AUTOMATIQUE D'UN DISPOSITIF DE CHARGE AINSI QUE VÉHICULE AUTOMOBILE

(30) Priorität: 10.01.2018 DE 102018200256; 09.05.2018 DE 102018207219
(43) Veröffentlichungstag der Anmeldung: 17.07.2019
(73) Patentinhaber: AUDI AG, 85045 Ingolstadt (DE)
(72) Erfinder: Wittl, Tobias, 85077 Manching (DE)

(56) Entgegenhaltungen:
- EP-A1- 2 774 799
- EP-A1- 2 826 660
- DE-A1-102011 010 809
- DE-A1-102014 102 210

## Beschreibung

Die Erfindung betrifft ein Verfahren zum automatischen Entriegeln einer Ladeanordnung sowie ein Kraftfahrzeug.

Aus der DE 10 2013 015 954 A1 ist bereits ein Verfahren zum Aufladen einer Energieversorgungseinheit eines Elektrokraftfahrzeugs mit elektrischer Energie von einer elektrischen Ladestation bekannt. Hierbei wird ein Ladekabel der Ladestation vor Beginn eines Ladevorgangs am Elektrokraftfahrzeug verriegelt. Nach Empfang eines universellen Freigabesignals durch das Elektrokraftfahrzeug wird die Verriegelung des Ladekabels freigegeben, wenn der Ladevorgang zu diesem Zeitpunkt abgeschlossen ist. Unter dem universellen Freigabesignal ist generell jedes geeignete Signal zu verstehen, dessen Gültigkeit nicht auf ein einzelnes, individuelles Elektrokraftfahrzeug beschränkt ist. Dieses universelle Freigabesignal ist dazu geeignet, bei allen an das Ladekabel der Ladestation anschließbaren Elektrokraftfahrzeugen eine Entriegelung des Ladekabels zu bewirken. Folglich können nicht nur zum Führen des an das Ladekabel angeschlossenen Elektrokraftfahrzeugs autorisierte Personen, sondern auch Dritte eine Entriegelung des Ladekabels erreichen, da die Freigabe des Ladekabels in Abhängigkeit von dem Empfangen des universellen Freigabesignals erfolgt.

Darüber hinaus ist aus der DE 10 2009 039 651 A1 ein Verfahren zum Bereitstellen eines Stromanschlusses in einer wenigstens zwei Steckdosen aufweisenden Ladesäule für ein elektrisch betreibbares Fahrzeug bekannt. Nach einer Beendigung eines Ladevorgangs des elektrisch betreibbaren Fahrzeugs kann ein in der Steckdose verriegelter Stecker entriegelt werden, sofern ein Freigabesignal empfangen wird. Das Freigabesignal kann bei Rückkehr eines Nutzers zu dem Fahrzeug automatisch erzeugt werden, beispielsweise bei einer automatischen Erkennung des Nutzers mittels RFID-Tag. Ebenso kann das Freigabesignal zusammen mit einem Beendigungssignal vom Nutzer an die Steckdose übertragen werden. Vorteilhafterweise kann durch die Entriegelung des Steckers nach Empfang des Freigabesignals sichergestellt werden, dass das Ladekabel bis zur Rückkehr des Nutzers in der Ladestation verriegelt und vor Diebstahl geschützt ist. Ein unautorisiertes Entwenden des Ladekabels wird hierdurch vermieden.

Überdies ist aus der DE 10 2014 226 755 A1 eine Vorrichtung zum elektrischen Verbinden einer Ladestation mit einer Ladebuchse eines Fahrzeugs bekannt. Um einen Energiespeicher des Fahrzeugs aufzuladen, wird ein Kontaktkopf in eine Ladebuchse des Fahrzeugs eingeführt. Auf diese Weise wird eine elektrische Verbindung zwischen einer Spannungsquelle und dem Fahrzeug hergestellt. Nach Abschluss eines Ladevorgangs des Energiespeichers des Fahrzeugs wird eine Spannungsversorgung zwischen der Ladestation und dem Fahrzeug unterbrochen und der Kontaktkopf wieder aus der Ladebuchse herausgezogen. Somit wird das Fahrzeug automatisch von der Ladesäule getrennt, sobald der Ladevorgang abgeschlossen ist.

Des Weiteren offenbart die DE 10 2011 010 809 A1 ein Verfahren zur Sicherung eines Ladevorgangs eines Fahrzeugs an einer Ladestation. Bei dem Verfahren wird ladestationsseitig ein eine Verriegelung eines Ladekabels an dem Fahrzeug bewirkendes Verriegelungssignal und/oder ladestationsseitig ein eine Entriegelung eines Ladekabels an dem Fahrzeug bewirkendes Entriegelungssignal an das Fahrzeug übermittelt. Das Ladekabel kann hierbei fahrzeugseitig nach Ablauf einer Ladedauer entriegelt werden. Das entriegelte Ladekabel kann durch eine optische Anzeige Dritten signalisiert werden.

Darüber hinaus ist aus der EP 2 774 799 A1 ein Verfahren zur Kommunikation zwischen einem Elektrofahrzeug und einer Ladestelle zum elektrischen Laden zumindest eines Energiespeichers des Elektrofahrzeugs bekannt. Das Elektrofahrzeug ist beim Ladevorgang an die Ladestelle über eine verriegelbare mechanische Kopplung zwischen einem Anschluss eines mit dem Elektrofahrzeug verbundenen Ladekabels und einem Anschluss der Ladestelle angeschlossen, um über das Ladekabel dem zumindest einen Energiespeicher Ladestrom von der Ladestelle zuzuführen. Über eine Signalisierung, welche von dem Elektrofahrzeug an die Ladestelle übermittelt wird, wird in der Ladestelle eine Entriegelung der mechanischen Kopplung ausgelöst.

Aufgabe der vorliegenden Erfindung ist es, ein Verfahren zum automatischen Entriegeln einer Ladeanordnung sowie ein Kraftfahrzeug zu schaffen, sodass eine Ladestation besonders vorteilhaft zum Laden mehrerer Kraftfahrzeuge genutzt werden kann.

Diese Aufgabe wird erfindungsgemäß durch ein Verfahren zum automatischen Entriegeln einer Ladeanordnung sowie durch ein Kraftfahrzeug mit den Merkmalen der unabhängigen Patentansprüche gelöst. Vorteilhafte Ausgestaltungen mit zweckmäßigen Weiterbildungen der Erfindung sind in den jeweils abhängigen Ansprüchen sowie der folgenden Beschreibung angegeben.

Ein erster Aspekt der Erfindung betrifft ein Verfahren zum automatischen Entriegeln einer Ladeanordnung, bei welcher ein elektrisch antreibbares Kraftfahrzeug mit einer Ladestation verbunden ist. Das elektrisch antreibbare Kraftfahrzeug, bei welchem es sich insbesondere um einen Personenkraftwagen handelt, umfasst eine Batterie, welche mittels elektrischer Energie von der Ladestation ladbar ist. Um eine Unterbrechung eines Ladevorgangs der Batterie zu vermeiden, sind das Kraftfahrzeug und die Ladestation während des Ladevorgangs mechanisch verbunden und verriegelt. Sobald ein vorgegebener Ladezustand bei der Batterie des Kraftfahrzeugs erreicht worden ist, erfolgt ein automatisches Entriegeln der mechanischen Verbindung zwischen der Ladestation und dem Kraftfahrzeug. Hierbei kann das Kraftfahrzeug einen jeweiligen Ladezustand der Batterie erfassen und bei Erreichen des vorgegebenen Ladezustands die mechanische Verbindung entriegeln. Hierdurch kann gewährleistet werden, dass die mechanische Verbindung zwischen dem Kraftfahrzeug und der Ladestation lediglich dann unterbrochen werden kann, wenn die Batterie den vorgegebenen Ladezustand erreicht hat. Somit ist die Batterie zumindest bis zum Erreichen des vorgegebenen Ladezustands im Rahmen des Ladevorgangs ohne Unterbrechung ladbar, da die mechanische Verbindung vor Erreichen des vorgegebenen Ladezustands verriegelt ist. Sobald die mechanische Verbindung entriegelt worden ist, generiert das Kraftfahrzeug ein Entriegelungssignal. Dieses Entriegelungssignal charakterisiert die Entriegelung der mechanischen Verbindung. Das generierte Entriegelungssignal wird anschließend vom Kraftfahrzeug an die Ladestation übertragen, welche infolgedessen signalisiert, dass die Ladestation frei ist. Das bedeutet, dass die Ladestation das mittels des Kraftfahrzeugs bereitgestellte Entriegelungssignal empfängt und infolgedessen das Entriegeln der mechanischen Verbindung signalisiert. Hierdurch kann besonders vorteilhaft ein Dritter darüber informiert werden, dass die Ladestation frei ist und die mechanische Verbindung zwischen dem Kraftfahrzeug und der Ladestation entriegelt ist und somit getrennt werden kann. Bei dem Verfahren wird somit bei Erreichen des vorgegebenen Ladezustands die mechanische Verbindung entriegelt, wobei die Ladestation mit dem Kraftfahrzeug mechanisch verbunden bleibt, bis die mechanische Verbindung zwischen der Ladestation und dem Kraftfahrzeug explizit getrennt wird. Das Kraftfahrzeug kann somit bei Bedarf, beispielsweise des Dritten oder des Fahrers des Kraftfahrzeugs, von der Ladestation mechanisch getrennt werden. Dies ermöglicht, dass eine Ladestation von mehreren Kraftfahrzeugen genutzt werden kann, indem die Ladestation signalisiert, dass ein Ladevorgang eines mit der Ladestation mechanisch verbundenen Kraftfahrzeugs abgeschlossen ist und die mechanische Verbindung entriegelt ist, sodass die Ladestation mit einem zu dem Kraftfahrzeug unterschiedlichen weiteren Fahrzeug zum Laden des weiteren Fahrzeugs verbunden werden kann. Hierdurch kann vermieden werden, dass die Ladestation mit dem Kraftfahrzeug verriegelt bleibt, obwohl die Batterie den vorgegebenen Ladezustand erreicht hat und somit das Kraftfahrzeug die Ladestation unnötig besetzt. Das Verfahren ermöglicht eine besonders effiziente Nutzung der Ladestation zum Laden einer Mehrzahl von Kraftfahrzeugen beziehungsweise Fahrzeugen, um deren Batterien jeweils bis zu deren vorgegebenem Ladezustand zu laden.

Erfindungsgemäß ist vorgesehen, dass vor Erreichen des vorgegebenen Ladezustands die mechanische Verbindung zwischen der Ladestation und dem Kraftfahrzeug automatisch entriegelt wird, sobald ein Zeitintervall einer gültigen Reservierung eines weiteren Kraftfahrzeugs läuft. Das bedeutet, dass die Ladestation mittels des Kraftfahrzeugs für das Zeitintervall reserviert wird und die mechanische Verbindung automatisch entriegelt wird, sobald das Zeitintervall läuft. Die gültige Reservierung charakterisiert das Zeitintervall, in welchem die Ladestation für das weitere Kraftfahrzeug zur Verfügung stehen soll. Somit wird beispielsweise die mechanische Verbindung automatisch entriegelt, sobald das Zeitintervall der gültigen Reservierung startet. Das weitere Kraftfahrzeug kann sich gegenüber der Ladestation als das die gültige Reservierung aufweisende weitere Kraftfahrzeug identifizieren, um ein mechanisches Verbinden des weiteren Kraftfahrzeugs mit der Ladestation während des Zeitintervalls der gültigen Reservierung zu ermöglichen. Hierfür kann das weitere Kraftfahrzeug beispielsweise eine Identifikationsnummer für die Ladestation bereitstellen, mittels welcher sich das weitere Kraftfahrzeug gegenüber der Ladestation identifizieren kann. Bei dem Verfahren kann beispielsweise jede mechanische Verbindung der Ladestation mit Kraftfahrzeugen automatisch entriegelt werden, sobald das Zeitintervall der gültigen Reservierung läuft, außer einer mechanischen Verbindung zwischen dem für das Zeitintervall eine gültige Reservierung aufweisenden weiteren Kraftfahrzeug und der Ladestation. Somit kann beispielsweise erreicht werden, dass während des Zeitintervalls vorteilhafterweise lediglich das die gültige Reservierung aufweisende weitere Kraftfahrzeug mittels der Ladestation geladen wird.

Hierbei ist vorgesehen, dass die mechanische Verbindung erst dann automatisch entriegelt wird, wenn zusätzlich zu dem laufenden Zeitintervall der Reservierung ein Ladebereitschaftssignal des weiteren Kraftfahrzeugs vorliegt, welches eine Bereitschaft des weiteren Kraftfahrzeugs charakterisiert, elektrische Energie von der Ladestation zu empfangen. Somit wird die mechanische Verbindung automatisch entriegelt, sobald das Zeitintervall der gültigen Reservierung des weiteren Kraftfahrzeugs läuft und das weitere Kraftfahrzeug der Ladestation mittels des Ladebereitschaftssignals signalisiert, dass es bereit ist, elektrische Energie von der Ladestation zu empfangen. Somit wird die mechanische Verbindung zwischen der Ladestation und dem Kraftfahrzeug lediglich dann bzw. erst dann automatisch entriegelt, wenn das weitere Kraftfahrzeug, welches die gültige Reservierung für das Zeitintervall aufweist, tatsächlich dazu bereit ist, geladen zu werden. Hierdurch kann vermieden werden, dass die Verbindung zwischen der Ladestation und dem Kraftfahrzeug automatisch entriegelt wird, obwohl das weitere Kraftfahrzeug trotz des laufenden Zeitintervalls der gültigen Reservierung noch nicht bereit ist, mechanisch mit der Ladestation verbunden zu werden und/oder elektrische Energie von der Ladestation zu empfangen. Beispielsweise ist das weitere Kraftfahrzeug, welches die gültige Reservierung aufweist, nicht dazu bereit, elektrische Energie von der Ladestation zu empfangen, falls es sich trotz des laufenden Zeitintervalls außerhalb einer Reichweite zur Energieübertragung relativ zur Ladestation befindet. Würde die mechanische Verbindung zwischen dem Kraftfahrzeug und der Ladestation trotzdem automatisch entriegelt werden, obwohl das weitere Kraftfahrzeug, welches die gültige Reservierung aufweist, nicht dazu bereit ist, mittels der Ladestation geladen zu werden, so wäre bei einem automatischen Entriegeln der mechanischen Verbindung die Ladestation bis zur Bereitschaft des weiteren Kraftfahrzeugs, geladen zu werden, ungenutzt. Das Erfolgen des automatischen Entriegelns der mechanischen Verbindung zwischen der Ladestation und dem Kraftfahrzeug lediglich dann, wenn sowohl das die Ladebereitschaft des weiteren, die gültige Reservierung aufweisenden Kraftfahrzeugs charakterisierende Ladebereitschaftssignal vorliegt, als auch das Zeitintervall läuft, ermöglicht, dass die Ladestation besonders effizient zum Laden sowohl des Kraftfahrzeugs als auch des weiteren Kraftfahrzeugs genutzt werden kann.

In weiterer vorteilhafter Ausgestaltung der Erfindung ist vorgesehen, dass das Zeitintervall und/oder das Ladebereitschaftssignal mittels einer Chipkarte und/oder mittels eines Mobiltelefons und/oder mittels Bluetooth und/oder mittels übermittelter GPS-Daten von dem weiteren Kraftfahrzeug bereitgestellt werden. Mit anderen Worten werden das Zeitintervall und/oder das Ladebereitschaftssignal von dem weiteren Kraftfahrzeug für die Ladestation mittels der Chipkarte, beispielsweise über einen RFID-Chip, und/oder mittels des Mobiltelefons, bei welchem es sich beispielsweise um ein Smartphone handeln kann, und/oder mittels Bluetooth und/oder mittels der übermittelten GPS-Daten, welche beispielsweise einen Zeitstempel aufweisen können, übertragen. Hierdurch kann eine besonders sichere und einfache Übertragung des Zeitintervalls und/oder des Ladebereitschaftssignals von dem weiteren, die Reservierung aufweisenden Kraftfahrzeug an die Ladestation ermöglicht werden.

In einer weiteren vorteilhaften Ausgestaltung der Erfindung ist es vorgesehen, dass die Ladestation ein das automatische Entriegeln charakterisierendes Entriegelungssignal zum Informieren des Fahrers des Kraftfahrzeugs für das Kraftfahrzeug bereitstellt. Mit anderen Worten stellt die Ladestation das Entriegelungssignal für das Kraftfahrzeug bereit, wobei das Entriegelungssignal charakterisiert, dass die mechanische Verbindung mit der Ladestation automatisch entriegelt worden ist. Dieses Entriegelungssignal kann über das Kraftfahrzeug an den Fahrer des Kraftfahrzeugs ausgegeben werden. Alternativ oder zusätzlich kann das Entriegelungssignal von dem Kraftfahrzeug beispielsweise an ein Smart Device des Fahrers des Kraftfahrzeugs übermittelt werden, um den Fahrer des Kraftfahrzeugs zu informieren. Hierdurch ist der Fahrer des Kraftfahrzeugs vorteilhafterweise darüber informierbar, ob sein Kraftfahrzeug mittels der Ladestation geladen wird, oder ob die mechanische Verbindung zwischen seinem Kraftfahrzeug und der Ladestation automatisch entriegelt worden ist und somit ein Laden seines Kraftfahrzeugs unterbrochen worden ist.

Es hat sich in einer weiteren Ausgestaltung der Erfindung als vorteilhaft gezeigt, wenn die Ladestation einen das Entriegeln charakterisierenden Entriegelungsbefehl für das Kraftfahrzeug bereitstellt und das Kraftfahrzeug die mechanische Verbindung entriegelt, sobald das Kraftfahrzeug den Entriegelungsbefehl empfängt. Somit löst die Ladestation vorteilhafterweise das automatische Entriegeln der mechanischen Verbindung zwischen der Ladestation und dem Kraftfahrzeug aus. Somit kann von der Ladestation vorgegeben werden, wann und ob die mechanische Verbindung entriegelt wird. Eine Aktion des Kraftfahrzeugs oder des Fahrers des Kraftfahrzeugs ist folglich nicht notwendig. Alternativ oder zusätzlich kann die Ladestation beim automatischen Entriegeln der mechanischen Verbindung zwischen dem Kraftfahrzeug und der Ladestation die mechanische Verbindung automatisch entriegeln.

Es ist in weiterer vorteilhafter Ausgestaltung der Erfindung vorgesehen, dass die Ladestation das Zeitintervall der Reservierung signalisiert. Dies bedeutet, dass die Ladestation anzeigt, für welches Zeitintervall bereits die Reservierung vorliegt. Beispielsweise kann die Ladestation hierfür eine Ausgabeeinrichtung aufweisen, mittels welcher das Zeitintervall der Reservierung ausgebbar ist. Beispielsweise ist das Zeitintervall der Reservierung mittels eines Lichtsignals ausgebbar, sodass ein sich der Ladestation nähernder Fahrer erkennen kann, ob eine Reservierung der Ladestation vorliegt und für welches Zeitintervall die Reservierung vorliegt. Anhand des mittels der Ladestation angezeigten Zeitintervalls der Reservierung kann der Fahrer entscheiden, ob er sein Kraftfahrzeug mit der Ladestation verbinden möchte, oder ob er sein Kraftfahrzeug lieber mit einer anderen Ladestation verbinden möchte. Anhand des ausgegebenen Zeitintervalls der Reservierung kann der Fahrer besonders vorteilhaft abschätzen, wie lange sein Kraftfahrzeug mittels der Ladestation voraussichtlich geladen werden kann, bis eine mechanische Verbindung zwischen der Ladestation und seinem Kraftfahrzeug aufgrund der Reservierung gegebenenfalls automatisch entriegelt werden würde. Somit kann der Fahrer eine besonders informierte Entscheidung treffen, ob er sein Kraftfahrzeug mit der Ladestation verbinden möchte.

In weiterer vorteilhafter Ausgestaltung der Erfindung ist es vorgesehen, dass ein Zeitintervall und/oder ein Startzeitpunkt der Reservierung von einem Navigationssystem des weiteren Kraftfahrzeugs ermittelt werden und die Reservierung mittels des Navigationssystems durchgeführt wird. Das bedeutet, dass das weitere Kraftfahrzeug das Navigationssystem aufweist, mittels welchem eine Fahrtroute des weiteren Kraftfahrzeugs von seinem Standort bis zur Ladestation ermittelt werden kann. In Abhängigkeit von der zurückzulegenden Fahrtroute von dem Standort des weiteren Kraftfahrzeugs bis zur Ladestation kann das Navigationssystem ermitteln, zu welchem Zeitpunkt das weitere Kraftfahrzeug voraussichtlich an der Ladestation eintrifft. Bei diesem Zeitpunkt handelt es sich um einen voraussichtlichen Ankunftszeitpunkt. In Abhängigkeit von dem voraussichtlichen Ankunftszeitpunkt kann das Navigationssystem den Startzeitpunkt der Reservierung ermitteln und beispielsweise für den voraussichtlichen Ankunftszeitpunkt als Startzeitpunkt die Ladestation reservieren. Hierbei kann das Navigationssystem dem Fahrer des weiteren Kraftfahrzeugs wenigstens zwei unterschiedliche Startzeitpunkte der Reservierung zur Auswahl vorschlagen, wobei das Navigationssystem eine Reservierung der Ladesäule in Abhängigkeit von dem von dem Fahrer ausgewählten Startzeitpunkt durchführt. Das Navigationssystem kann des Weiteren eine in dem weiteren Kraftfahrzeug vorhandene Menge an elektrischer Energie zum Antreiben des weiteren Kraftfahrzeugs ermitteln und in Abhängigkeit von der ermittelten vorhandenen Menge an elektrischer Energie zum Antreiben des weiteren Kraftfahrzeugs das Zeitintervall der Reservierung ermitteln. Alternativ oder zusätzlich kann das Navigationssystem eine Fahrtroute des Kraftfahrzeugs von der Ladestation bis zu einem von dem Fahrer des weiteren Kraftfahrzeugs vorgegebenen Zielort berechnen und in Abhängigkeit von der Fahrtroute zwischen der Ladestation und dem von dem Fahrer vorgegebenen Zielort eine voraussichtliche, zum Zurücklegen der Fahrtroute benötigte Menge an elektrischer Energie zum Antreiben des weiteren Kraftfahrzeugs ermitteln. In Abhängigkeit von der voraussichtlich benötigten Menge an elektrischer Energie zum Antreiben des weiteren Kraftfahrzeugs für die Strecke von der Ladestation bis zu dem Zielort kann das Navigationssystem das Zeitintervall für die Reservierung ermitteln. Alternativ oder zusätzlich kann das Navigationssystem dem Fahrer des weiteren Kraftfahrzeugs wenigstens zwei Zeitintervalle für die Reservierung zur Auswahl vorgeben und das Zeitintervall für die Reservierung in Abhängigkeit von der Auswahl des Fahrers festlegen. Mittels des Navigationssystems und/oder mittels eines Smart Devices des Fahrers des weiteren Kraftfahrzeugs kann die Reservierung für das Zeitintervall und zu dem Startzeitpunkt getätigt werden. Beispielsweise wird hierbei die Reservierung von dem Navigationssystem und/oder von dem Smart Device des Fahrers des weiteren Kraftfahrzeugs für die Ladestation bereitgestellt. Die beschriebene vorteilhafte Weiterbildung des Verfahrens ermöglicht es, dass mittels des Navigationssystems eine besonders ladeeffiziente Fahrtroute sowie ein besonders zeiteffizientes Aufladen des weiteren Kraftfahrzeugs ermöglicht werden kann, da das Navigationssystem Aufladepausen für das weitere Kraftfahrzeug zum Zurücklegen der Fahrtroute ermittelt und die Reservierung entsprechend den Aufladepausen tätigt. Hierdurch kann gewährleistet werden, dass das Kraftfahrzeug die Fahrtroute besonders schnell zurücklegen kann, da das Kraftfahrzeug insbesondere aufgrund der Reservierung dann geladen werden kann, sobald es an der Ladestation ankommt, sofern das Navigationssystem das Zeitintervall und/oder den Startzeitpunkt der Reservierung in Abhängigkeit von der Fahrtroute und/oder dem Standort des Kraftfahrzeugs ermittelt und getätigt hat.

In einer weiteren vorteilhaften Ausgestaltung der Erfindung ist es vorgesehen, dass mittels der Ladestation das Kraftfahrzeug und wenigstens ein weiteres Kraftfahrzeug über jeweilige Ladeanschlüsse der Ladestation bis zu einem jeweiligen vorgegebenen Ladezustand aufgeladen werden, wobei mittels der Ladestation eine Ladeleistung des wenigstens einen mit dem weiteren Kraftfahrzeug verbundenen Ladeanschlusses verändert wird, sobald das Kraftfahrzeug den vorgegebenen Ladezustand aufweist. Dies bedeutet, dass die Ladestation über deren Ladeanschlüsse mit wenigstens zwei Kraftfahrzeugen verbunden ist, wobei eine jeweilige Entladeleistung der Ladestation in Abhängigkeit von einem Ladezustand der mit der Ladestation verbundenen Kraftfahrzeuge einstellbar ist. Hierbei können die über unterschiedliche Ladeanschlüsse mit der Ladestation verbundenen Kraftfahrzeuge mit unterschiedlichen Entladeleistungen der Ladestation mit elektrischer Energie versorgt werden. Hierbei kann eine erste Entladeleistung der Ladestation für das Kraftfahrzeug größer oder kleiner sein als eine zweite Entladeleistung der Ladestation für das weitere Kraftfahrzeug. Hierbei kann die Entladeleistung, mittels welcher die jeweiligen mit der Ladestation verbundenen Kraftfahrzeuge mit elektrischer Energie versorgt werden, von einer maximalen Aufladeleistung der jeweiligen mit der Ladestation verbundenen Kraftfahrzeuge abhängig sein und/oder von einer Reihenfolge der Herstellung von mechanischen Verbindungen zwischen den jeweiligen Kraftfahrzeugen und der Ladestation abhängen und/oder von einem Preis für die von der Ladestation bereitgestellte elektrische Energie abhängen. Somit kann die Entladeleistung der Ladestation besonders vorteilhaft an wenigstens einen Faktor angepasst werden.

In diesem Zusammenhang hat es sich als vorteilhaft gezeigt, wenn die Ladeleistung des wenigstens einen mit dem weiteren Kraftfahrzeug verbundenen Ladeanschlusses null beträgt, solange ein Ladezustand des Kraftfahrzeugs unter dem vorgegebenen Ladezustand liegt. Dies bedeutet, dass, sobald der Ladezustand des Kraftfahrzeugs den vorgegebenen Ladezustand erreicht hat, die Entladeleistung des weiteren, mit der Ladestation verbundenen Kraftfahrzeugs von null auf einen Entladeleistungswert von größer null angehoben wird. Folglich wird erst das Kraftfahrzeug bis zu dem vorgegebenen Ladezustand geladen und das weitere Kraftfahrzeug nicht mit elektrischer Energie von der Ladestation versorgt, solange der Ladezustand des Kraftfahrzeugs unterhalb des vorgegebenen Ladezustands liegt. Sobald der Ladezustand des Kraftfahrzeugs den vorgegebenen Ladezustand erreicht hat, stellt die Ladestation ihre Entladeleistung dem wenigstens einen weiteren, mit der Ladestation verbundenen Kraftfahrzeug zur Verfügung. Somit können mehrere mittels der Ladestation mit elektrischer Energie versorgbare Kraftfahrzeuge nacheinander jeweils bis zu ihren vorgegebenen Ladezuständen geladen werden. Somit kann gewährleistet werden, dass die Kraftfahrzeuge entsprechend ihrer Reihenfolge, in welcher sie mit der Ladestation verbunden worden sind, nacheinander bis zu dem jeweils vorgegebenen Ladezustand aufgeladen werden. Folglich kann ein jeweiliger Ladezeitraum für jedes der Kraftfahrzeuge zum Beladen bis zu dem vorgegebenen Ladezustand ab Starten des Ladevorgangs besonders kurz gehalten werden.

In einer hierzu alternativen vorteilhaften Ausgestaltung der Erfindung ist es vorgesehen, dass eine maximale Entladeleistung der Ladestation ermittelt wird und in Abhängigkeit davon, wieviel von der Entladeleistung das Kraftfahrzeug und das wenigstens eine weitere Kraftfahrzeug bereit sind, zu empfangen, die Entladeleistung auf die Ladeanschlüsse der Ladestation aufgeteilt wird. Dies bedeutet, dass eine jeweilige maximale Aufladeleistung der über die Ladeanschlüsse mit der Ladestation verbundenen Kraftfahrzeuge ermittelt wird und die Entladeleistung der Ladestation in Abhängigkeit von den maximalen Aufladeleistungen der jeweiligen über die Ladeanschlüsse mit der Ladestation verbundenen Kraftfahrzeuge auf die Ladeanschlüsse der Ladestation verteilt wird. Dies ermöglicht, dass die mit der Ladestation gleichzeitig verbundenen Kraftfahrzeuge gleichzeitig mit elektrischer Energie versorgt werden können, wobei eine jeweilige, den jeweiligen Kraftfahrzeugen zugeordnete Entladeleistung der Ladestation in Abhängigkeit von einer maximalen Aufladeleistung des jeweiligen Kraftfahrzeugs eingestellt wird. Hierbei kann beispielsweise eine Priorisierung der mit der Ladestation verbundenen Kraftfahrzeuge in Abhängigkeit von einer Reihenfolge eines Verbindens der jeweiligen Kraftfahrzeuge mit der Ladestation erfolgen. Dies bedeutet, dass ein erstes mit der Ladestation verbundenes Kraftfahrzeug, insbesondere das Kraftfahrzeug, entsprechend seiner maximalen Aufladeleistung mit einer der maximalen Aufladeleistung entsprechenden Entladeleistung von der Ladestation mit elektrischer Energie versorgt wird. Eine noch zur Verfügung stehende Restentladeleistung der Ladestation kann auf weitere zeitlich nach dem Kraftfahrzeug mit der Ladestation verbundene Kraftfahrzeuge verteilt werden. Hierdurch wird erreicht, dass die mit der Ladestation verbundenen Kraftfahrzeuge entsprechend ihrer Reihenfolge der Verbindung mit der Ladestation priorisiert mit der Entladeleistung versorgt werden, wobei sichergestellt werden kann, dass die maximale von der Ladestation bereitstellbare Entladeleistung besonders vorteilhaft genutzt wird, da von dem Kraftfahrzeug aufgrund dessen maximaler Aufladeleistung nicht benötigte Entladeleistung für das wenigstens eine weitere Kraftfahrzeug bereitgestellt werden kann. Hierdurch kann ein besonders effizientes Laden mehrerer Kraftfahrzeuge mittels der Ladestation erfolgen.

In einer weiteren vorteilhaften Ausgestaltung der Erfindung ist vorgesehen, dass beim automatischen Entriegeln entweder ein fahrzeugseitiger Ladestecker, der in einer Ladebuchse der Ladestation eingesteckt und mit dieser verriegelt ist, entriegelt wird oder ein ladestationsseitiger Stecker, der in eine fahrzeugseitige Ladebuchse eingesteckt und mit dieser verriegelt ist, entriegelt wird. Mit anderen Worten weist das Kraftfahrzeug den fahrzeugseitigen Ladestecker und die Ladestation die ladestationsseitige Ladebuchse auf oder das Kraftfahrzeug weist die kraftfahrzeugseitige Ladebuchse und die Ladestation den ladestationsseitigen Ladestecker auf. In beiden Fällen ist der Ladestecker jeweils mit der Ladebuchse verbunden, indem der Ladestecker in die Ladebuchse eingesteckt ist. Hierbei können der Ladestecker und/oder die Ladebuchse eine Verriegelungseinrichtung aufweisen, mittels welcher die mechanische Verbindung zwischen dem Ladestecker und der Ladebuchse verriegelbar und freigebbar ist. Beim automatischen Entriegeln wird die mechanische Verbindung zwischen der Ladebuchse und dem Ladestecker entriegelt beziehungsweise freigegeben und das die Freigabe charakterisierende Entriegelungssignal von dem Kraftfahrzeug für die Ladestation bereitgestellt. Die den Ladestecker und die Ladebuchse aufweisende mechanische Verbindung des Kraftfahrzeugs mit der Ladestation hat den Vorteil, dass das Kraftfahrzeug besonders sicher mit der Ladestation verbindbar ist und die mechanische Verbindung mittels der Verriegelungseinrichtung besonders einfach verriegelbar und freigebbar ist.

In einer vorteilhaften Weiterbildung der Erfindung ist vorgesehen, dass der vorgegebene Ladezustand in Abhängigkeit von einer Benutzervorgabe vorgegeben wird. Das bedeutet, dass das Kraftfahrzeug die Benutzervorgabe empfängt, welche den vorgegebenen Ladezustand charakterisiert. Nach Empfangen des vorgegebenen Ladezustands kann das Kraftfahrzeug den jeweiligen Ladezustand der Batterie mit dem vorgegebenen Ladezustand vergleichen und in Abhängigkeit von dem Vergleich die mechanische Verbindung automatisch entriegeln. Hierbei kann die Benutzervorgabe beispielsweise charakterisieren, dass ein die Benutzervorgabe tätigender Benutzer ein Laden der Batterie bis zu einem Ladezustand von beispielsweise 75 Prozent wünscht, sodass der Ladezustand der Batterie besonders schnell den vorgegebenen Ladezustand im Rahmen des Ladevorgangs erreicht und der Benutzer das Kraftfahrzeug besonders schnell nutzen kann.

In einer alternativen vorteilhaften Ausgestaltung der Erfindung ist vorgesehen, dass der vorgegebene Ladezustand ein vollgeladener Zustand der Batterie ist. Unter dem vollgeladenen Zustand der Batterie ist zu verstehen, dass der vorgegebene Ladezustand der Batterie wenigstens 90 Prozent, insbesondere wenigstens 95 Prozent, insbesondere wenigstens 99 Prozent, insbesondere 100 Prozent, einer Ladekapazität der Batterie entspricht. Dies ermöglicht, dass sichergestellt wird, dass die mechanische Verbindung zwischen dem Kraftfahrzeug und der Ladestation lediglich dann entriegelt wird, wenn die Batterie des Kraftfahrzeugs voll geladen ist. Hierdurch wird dem Dritten lediglich dann ein Lösen der mechanischen Verbindung zwischen dem Kraftfahrzeug und der Ladestation ermöglicht, wenn die Batterie des Kraftfahrzeugs voll geladen ist.

In einer weiteren vorteilhaften Ausgestaltung der Erfindung ist vorgesehen, dass die Ladestation mittels einer Ausgabeeinrichtung signalisiert, dass die Ladestation frei ist. Dies bedeutet, dass die Ladestation mittels der Ausgabeeinrichtung eine Freigabeinformation bereitstellt, welche charakterisiert, dass die Ladestation frei ist. Hierbei kann die Ausgabeeinrichtung Teil der Ladestation sein oder von der Ladestation beabstandet und extern der Ladestation sein. Beispielsweise umfasst die Ausgabeeinrichtung eine Bildschirmeinrichtung und/oder ein Leuchtelement und/oder eine Lautsprechereinrichtung und/oder eine sonstige Einrichtung, mittels welcher ein haptisches und/oder akustisches und/oder optisches Freigabesignal ausgegeben werden kann. Dies ermöglicht ein besonders umfangreiches Informieren des Dritten und/oder des Fahrers des Kraftfahrzeugs, ob die Ladestation frei ist und somit die mechanische Verbindung zwischen der Ladestation und dem Kraftfahrzeug entriegelt ist.

In einer weiteren vorteilhaften Ausgestaltung der Erfindung ist vorgesehen, dass die Ladestation das Entriegelungssignal an eine Servereinrichtung überträgt, welche das Entriegelungssignal an eine App überträgt, wobei die App infolgedessen signalisiert, dass die Ladestation frei ist. Bei der App handelt es sich um eine Anwendungssoftware eines Smart Devices, beispielsweise eines Smartphones oder einer Recheneinrichtung des Kraftfahrzeugs oder einer Recheneinrichtung des weiteren Fahrzeugs. Es wird mittels der Ladestation das Entriegelungssignal für die Servereinrichtung bereitgestellt. Nach Empfangen des Entriegelungssignals durch die Servereinrichtung stellt die Servereinrichtung das Entriegelungssignal für die App bereit. Die App signalisiert nach Empfang des Entriegelungssignals beispielsweise mittels eines haptischen und/oder optischen und/oder akustischen Signals, dass die Ladestation frei ist. Hierbei kann die App dem Fahrer des Kraftfahrzeugs und/oder dem Dritten signalisieren, dass die mechanische Verbindung zwischen dem Kraftfahrzeug und der Ladestation entriegelt ist. Dabei kann die App auf dem Smart Device und/oder in der Recheneinrichtung des Kraftfahrzeugs und/oder in der Recheneinrichtung des weiteren Fahrzeugs installiert sein, sodass mittels des Smart Devices und/oder mittels der Recheneinrichtung des Kraftfahrzeugs und/oder mittels der Recheneinrichtung des weiteren Fahrzeugs dem Fahrer und/oder einem Dritten signalisiert werden kann, dass die Ladestation von dem Kraftfahrzeug freigegeben worden ist. Hierdurch können der Fahrer und/oder der Dritte über die freie Ladestation informiert werden, auch wenn sich diese beabstandet zur Ladestation und/oder beabstandet zu der Ausgabeeinrichtung befinden.

Es hat sich in weiterer Ausgestaltung der Erfindung als vorteilhaft gezeigt, wenn das Kraftfahrzeug ein Ladezustandssignal, welches einen Ladezustand der Batterie charakterisiert, an die Ladestation überträgt, wobei die Ladestation in Abhängigkeit von dem Ladezustandssignal eine Restladezeit der Batterie bis zu dem vorgegebenen Ladezustand ermittelt. Mit anderen Worten kann das Kraftfahrzeug eine Differenz zwischen einem jeweiligen Ladezustand der Batterie und dem vorgegebenen Ladezustand ermitteln und aus der Differenz die Restladezeit der Batterie ermitteln. Anschließend generiert das Kraftfahrzeug das die Restladezeit der Batterie charakterisierende Ladezustandssignal und stellt dieses für die Ladestation bereit. In einer alternativen Ausführungsform stellt das Kraftfahrzeug das den jeweiligen Ladezustand der Batterie charakterisierende Ladezustandssignal für die Ladestation bereit, wobei die Ladestation aus der Differenz zwischen dem jeweiligen Ladezustand der Batterie und dem vorgegebenen Ladezustand der Batterie die Restladezeit der Batterie ermittelt. Hierdurch kann besonders vorteilhaft ermittelt werden, wie lange der Ladevorgang der Batterie voraussichtlich noch dauern wird und zu welchem Zeitpunkt die mechanische Verbindung voraussichtlich entriegelt wird.

Hierbei hat es sich als vorteilhaft erwiesen, wenn die Ladestation mittels einer Ausgabeeinrichtung die Restladezeit der Batterie anzeigt. Dabei kann die Ladestation die Restladezeit mittels derselben Ausgabeeinrichtung signalisieren, mittels welcher die Ladestation signalisiert, dass die Ladestation frei ist. Alternativ kann die Ladestation die Restladezeit der Batterie mittels einer weiteren Ausgabeeinrichtung signalisieren. Die weitere Ausgabeeinrichtung kann an der Ladestation angeordnet oder von der Ladestation beabstandet und somit extern angeordnet sein. Des Weiteren kann die Ausgabeeinrichtung eine Bildschirmeinrichtung und/oder ein Leuchtelement und/oder eine Lautsprechereinrichtung und/oder Mittel zum Erzeugen eines akustischen und/oder optischen und/oder haptischen Signals aufweisen. Dies ermöglicht, dass der Fahrer des Kraftfahrzeugs und/oder der Dritte besonders umfangreich über die Restladezeit der Batterie informiert werden können.

In einer weiteren vorteilhaften Ausgestaltung der Erfindung ist es alternativ oder zusätzlich vorgesehen, dass die Ladestation die Restladezeit der Batterie an eine Servereinrichtung überträgt, welche die Restladezeit der Batterie an eine App überträgt, wobei die App infolgedessen die Restladezeit der Batterie ausgibt. Hierbei kann es sich bei der Servereinrichtung und bei der App um die Servereinrichtung und um die App handeln, an welche die Ladestation das Entriegelungssignal überträgt. Bei der Servereinrichtung handelt es sich um eine extern des Kraftfahrzeugs und extern des Fahrzeugs und extern der Ladestation angeordnete übergeordnete Servereinrichtung, welche als Mittler der Übertragung der Restladezeit von der Ladestation an die App dient. Über die App kann somit dem Fahrer und/oder dem Dritten die Restladezeit der Batterie ausgegeben werden, unabhängig davon, in welchem Abstand sich der Fahrer und/oder der Dritte zu der Ladestation und/oder zu dem Kraftfahrzeug und/oder zu dem Fahrzeug befindet.

Ein weiterer Aspekt der Erfindung betrifft ein Kraftfahrzeug, welches elektrisch antreibbar ist und welches dazu eingerichtet ist, mit einer Ladestation verbunden zu werden, um eine Batterie des elektrisch betreibbaren Kraftfahrzeugs im Rahmen eines Ladevorgangs zu laden. Das Kraftfahrzeug ist des Weiteren dazu eingerichtet, eine mechanische Verbindung zwischen der Ladestation und dem Kraftfahrzeug automatisch zu entriegeln, sobald ein vorgegebener Ladezustand bei der Batterie des Kraftfahrzeugs erreicht worden ist. Hierbei kann das Kraftfahrzeug einen Vergleich zwischen einem momentanen Ladezustand der Batterie und dem vorgegebenen Ladezustand der Batterie durchführen und in Abhängigkeit von dem Vergleich die mechanische Verbindung freigeben. Das Kraftfahrzeug ist des Weiteren dazu eingerichtet, ein Entriegelungssignal zu generieren, sobald die mechanische Verbindung entriegelt worden ist. Zudem ist das Kraftfahrzeug dazu eingerichtet, das generierte Entriegelungssignal an die Ladestation zu übertragen, welche infolgedessen signalisiert, dass die Ladestation frei ist. Insbesondere ist das Kraftfahrzeug dazu eingerichtet, das oben erläuterte erfindungsgemäße Verfahren durchzuführen. Dabei ist das Kraftfahrzeug erfindungsgemäß dazu eingerichtet vor Erreichen des vorgegebenen Ladezustands die mechanische Verbindung zwischen der Ladestation und dem Kraftfahrzeug automatisch zu entriegeln, sobald ein Zeitintervall einer gültigen Reservierung eines weiteren Kraftfahrzeugs läuft und die mechanische Verbindung erst dann automatisch zu entriegeln, wenn zusätzlich zu dem laufenden Zeitintervall der Reservierung ein Ladebereitschaftssignal des weiteren Kraftfahrzeugs vorliegt, welches eine Bereitschaft des weiteren Kraftfahrzeugs charakterisiert, elektrische Energie von der Ladestation zu empfangen. Vorteilhafterweise kann das Kraftfahrzeug die mechanische Verbindung zwischen dem Kraftfahrzeug und der Ladestation freigeben, sobald die Batterie den vorgegebenen Ladezustand erreicht hat, sodass die Ladestation zum Laden eines weiteren Fahrzeugs genutzt werden kann. Hierdurch ist ein besonders effizientes Nutzen der Ladestation zum Laden mehrerer Batterien unterschiedlicher Fahrzeuge beziehungsweise Kraftfahrzeuge möglich.

Zu der Erfindung gehört auch eine Steuervorrichtung für das Kraftfahrzeug. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Vorteile und vorteilhafte Ausgestaltungen des erfindungsgemäßen Verfahrens sind als Vorteile und vorteilhafte Ausgestaltungen des erfindungsgemäßen Kraftfahrzeugs anzusehen und umgekehrt. Aus diesem Grund sind die Vorteile und vorteilhaften Ausgestaltungen des erfindungsgemäßen Kraftfahrzeugs hier nicht noch einmal beschrieben.

Die Erfindung umfasst auch die Kombinationen der beschriebenen Ausführungsformen.

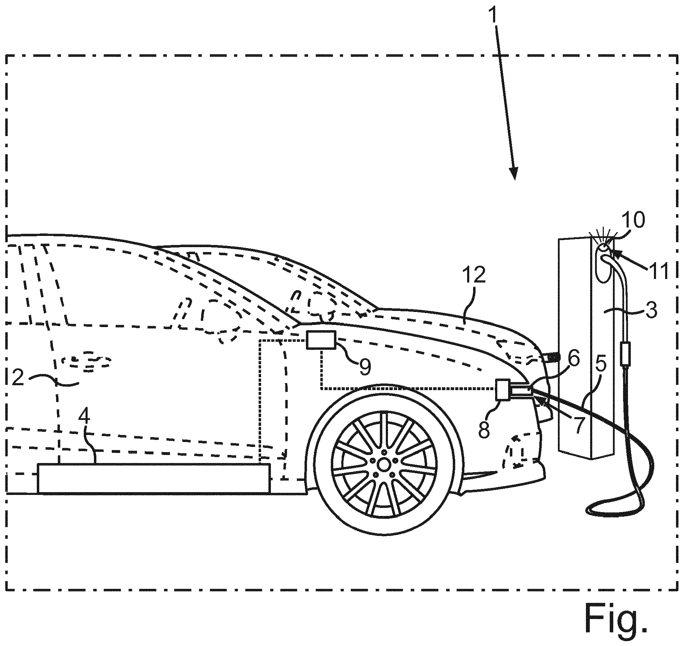

Im Folgenden sind Ausführungsbeispiele der Erfindung beschrieben. Hierzu zeigt die einzige Fig. ein Verfahrensschema zum automatischen Entriegeln einer Ladeanordnung, bei welcher ein elektrisch antreibbares Kraftfahrzeug mit einer Ladestation verbunden ist, wobei das Kraftfahrzeug eine mechanische Verbindung zwischen dem Kraftfahrzeug und der Ladestation automatisch entriegelt, sobald ein Ladezustand einer Batterie des Kraftfahrzeugs einem vorgegebenen Ladezustand für die Batterie entspricht und das Kraftfahrzeug stellt für die Ladestation ein die automatische Entriegelung charakterisierendes Entriegelungssignal bereit.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In der einzigen Fig. ist in einer schematischen Seitenansicht eine Ladeanordnung 1 dargestellt, bei welcher ein elektrisch antreibbares Kraftfahrzeug 2 mit einer Ladestation 3 verbunden ist. Das elektrisch betreibbare Kraftfahrzeug 2 weist eine Batterie 4 auf, welche mittels elektrischer Energie von der Ladestation 3 geladen werden kann. Während eines Ladevorgangs der Batterie 4 ist die Ladestation 3 über ein Ladekabel 5 mit dem Kraftfahrzeug 2 verbunden. Hierbei ist ein ladestationsseitiger Ladestecker 6 in eine fahrzeugseitige Ladebuchse 7 des Kraftfahrzeugs 2 eingesteckt und während eines Ladevorgangs der Batterie 4 mit dieser verriegelt. Hierfür kann das Kraftfahrzeug 2 eine Verriegelungseinrichtung 8 aufweisen, mittels welcher eine mechanische Verbindung zwischen dem ladestationsseitigen Ladestecker 6 und der fahrzeugseitigen Ladebuchse 7 während des Ladevorgangs der Batterie 4 verriegelbar ist.

Das Kraftfahrzeug 2 kann des Weiteren eine Recheneinrichtung 9 aufweisen, mittels welcher ein Ladezustand der Batterie 4 ermittelbar und mit einem vorgegebenen Ladezustand vergleichbar ist. Dieser vorgegebene Ladezustand der Batterie 4 kann in Abhängigkeit von einer mittels der Recheneinrichtung 9 empfangenen Benutzervorgabe vorgegeben werden oder einen vollgeladenen Zustand der Batterie 4 charakterisieren. Ermittelt die Recheneinrichtung 9, dass der vorgegebene Ladezustand bei der Batterie 4 des Kraftfahrzeugs 2 erreicht worden ist und somit der Ladezustand dem vorgegebenen Ladezustand entspricht, dann löst die Recheneinrichtung 9 ein automatisches Entriegeln der mechanischen Verbindung zwischen dem ladestationsseitigen Ladestecker 6 und der fahrzeugseitigen Ladebuchse 7 mittels der Verriegelungseinrichtung 8 aus. Anschließend generiert die Recheneinrichtung 9 ein Entriegelungssignal, welches das Entriegeln der mechanischen Verbindung charakterisiert, sobald die mechanische Verbindung entriegelt worden ist. Im Anschluss daran stellt die Recheneinrichtung 9 das generierte Entriegelungssignal für die Ladestation 3 bereit.

Die Ladestation 3 signalisiert, dass die Ladestation 3 frei ist, sobald die Ladestation 3 das generierte Entriegelungssignal empfangen hat. Vorliegend signalisiert die Ladestation 3 mittels einer wenigstens ein Leuchtelement 10 umfassenden Ausgabeeinrichtung 11, dass die Ladestation 3 frei ist und die mechanische Verbindung zwischen der Ladestation 3 und dem Kraftfahrzeug 2 entriegelt ist. Alternativ oder zusätzlich kann die Ladestation 3 das von dem Kraftfahrzeug 2 empfangene Entriegelungssignal an eine der Ladeanordnung 1 übergeordnete, externe Servereinrichtung übertragen, welche wiederum das Entriegelungssignal an eine App übertragen kann. Diese App kann auf einem Smart Device wie einem Smartphone oder einer Smartwatch oder einem Tablet-Computer installiert sein oder in der Recheneinrichtung 9 des Kraftfahrzeugs 2 installiert sein. Diese App signalisiert infolge des Empfanges des Entriegelungssignals, dass die Ladestation 3 frei ist.

Sieht ein Dritter an der Ausgabeeinrichtung 11 der Ladestation 3 und/oder an der App, dass die mechanische Verbindung zwischen dem Kraftfahrzeug 2 und der Ladestation 3 entriegelt ist, so kann der Dritte die mechanische Verbindung zwischen dem Kraftfahrzeug 2 und der Ladestation 3 trennen. Anschließend kann der Dritte die Ladestation 3 mit einem weiteren Kraftfahrzeug 12 verbinden, um eine weitere Batterie des weiteren Kraftfahrzeugs 12 zu laden. Dies ermöglicht, dass das weitere Kraftfahrzeug 12 mittels der Ladestation 3 geladen werden kann, sobald der vorgegebene Ladezustand bei der Batterie 4 des Kraftfahrzeugs 2 erreicht worden ist und infolge dessen die mechanische Verbindung zwischen dem Kraftfahrzeug 2 und der Ladestation 3 automatisch entriegelt worden ist. Die mechanische Verbindung wird somit nicht erst durch eine Aktion des Fahrers des Kraftfahrzeugs 2 entriegelt. Das automatische Entriegeln der Ladeanordnung 1 ermöglicht ein besonders effizientes Nutzen der Ladestation 3 zum Laden mehrerer Batterien unterschiedliche Kraftfahrzeuge jeweils bis zu deren vorgegebenem Ladezustand.

Das Kraftfahrzeug 2 kann ein Ladezustandssignal, welches einen Ladezustand der Batterie 4 charakterisiert, an die Ladestation 3 übertragen, wobei die Ladestation 3 in Abhängigkeit von dem Ladezustandssignal eine Restladezeit der Batterie 4 bis zu dem vorgegebenen Ladezustand ermittelt. Alternativ kann das Kraftfahrzeug 2 anhand des Ladezustands der Batterie 4 und dem vorgegebenen Ladezustand für die Batterie 4 die Restladezeit der Batterie 4 ermitteln und als das Ladezustandssignal an die Ladestation 3 übertragen. Infolge des Empfanges des Ladezustandssignals kann die Ladestation 3 die Restladezeit mittels der Ausgabeeinrichtung 11 über wenigstens ein Leuchtelement 10 und/oder mittels einer nicht dargestellten Bildschirmeinrichtung anzeigen beziehungsweise ausgeben. Alternativ oder zusätzlich kann die Ladestation 3 die Restladezeit der Batterie 4 an die Servereinrichtung übertragen, welche die Restladezeit der Batterie 4 an die App überträgt. Die App gibt infolge des Empfangens der Restladezeit der Batterie 4 diese an den Fahrer des Kraftfahrzeugs 2 und/oder den Dritten aus. Anhand der Restladezeit kann der Dritte vorteilhafterweise erkennen, wie lang die mechanische Verbindung zwischen dem Kraftfahrzeug 2 und der Ladestation 3 voraussichtlich verriegelt bleiben wird, beziehungsweise zu welchem Zeitpunkt das automatische Entriegeln der mechanischen Verbindung voraussichtlich stattfinden wird. In einem Anwendungsfall kann ein Fahrer des weiteren Kraftfahrzeugs 12, bei welchem es sich um den Dritten handeln kann, aus einer Mehrzahl von unterschiedliche Restladezeiten anzeigenden Ladestationen 3 eine Ladestation 3 mit einer im Vergleich zu den jeweils anderen Ladestationen 3 besonders kurzen Restladezeit auswählen, um das Kraftfahrzeug 12 zukünftig mittels der ausgewählten Ladestation 3 zu laden. Alternativ oder zusätzlich kann der Fahrer des weiteren Kraftfahrzeugs 12 aus der Mehrzahl der Ladestationen 3 diejenige Ladestation 3 auswählen, welche signalisiert, dass die zugehörige Ladestation 3 frei ist.

Wie in der einzigen Fig. erkannt werden kann, wird das Kraftfahrzeug 2 mittels der Ladestation 3 mit elektrischer Energie versorgt. Hierbei kann die mechanische Verbindung zwischen der Ladestation 3 und dem Kraftfahrzeug 2 vor Erreichen des vorgegebenen Ladezustands automatisch entriegelt werden, sofern eine gültige Reservierung des weiteren Kraftfahrzeugs 12 für die Ladestation 3 vorliegt und das Zeitintervall der gültigen Reservierung läuft. Dies bedeutet, dass die mechanische Verbindung zwischen der Ladestation 3 und dem Kraftfahrzeug 2 entriegelt wird, sobald das Zeitintervall läuft, in welchem die Ladestation 3 für das weitere Kraftfahrzeug 12 reserviert ist. Um zu verhindern, dass die mechanische Verbindung zwischen dem Kraftfahrzeug 2 und der Ladestation 3 während des laufenden Zeitintervalls der Reservierung entriegelt wird, obwohl das weitere Kraftfahrzeug 12 noch nicht bereit ist, mit der Ladestation 3 verbunden zu werden, kann die mechanische Verbindung insbesondere erst dann automatisch entriegelt werden, wenn zusätzlich zu dem laufenden Zeitintervall der Reservierung ein Ladebereitschaftssignal des weiteren Kraftfahrzeugs 12 vorliegt. Dieses Ladebereitschaftssignal des weiteren Kraftfahrzeugs 12 charakterisiert, dass das weitere Kraftfahrzeug 12 bereit ist, mit der Ladestation 3 verbunden zu werden, um von der Ladestation 3 mit elektrischer Energie versorgt zu werden. Somit wird die mechanische Verbindung zwischen dem Kraftfahrzeug 2 und der Ladestation 3 erst dann mechanisch entriegelt, wenn sowohl das Zeitintervall der Reservierung läuft als auch das weitere Kraftfahrzeug 12 dazu bereit ist, elektrische Energie von der Ladestation 3 zu empfangen. Hierbei kann das weitere Kraftfahrzeug 12 insbesondere dann dazu bereit sein, von der Ladestation 3 mit elektrischer Energie versorgt zu werden, wenn das Kraftfahrzeug 12 innerhalb eines definierten Höchstabstands zur Ladestation 3 angeordnet ist. Hierbei kann der definierte Höchstabstand zur Ladestation 3 von einer Länge des Ladekabels 5 der Ladestation 3 abhängen. Somit kann das Ladekabel 5 den definierten Höchstabstand charakterisieren, welchen das weitere Kraftfahrzeug 12 für eine Bereitschaft, geladen zu werden, lediglich zu der Ladestation 3 aufweisen darf.

Hierbei kann das Zeitintervall und/oder das Ladebereitschaftssignal mittels einer Chipkarte, sofern sich das weitere Kraftfahrzeug 12 innerhalb eines Funkradius der Chipkarte zur Ladestation 3 befindet, und/mittels eines Mobiltelefons und/oder mittels Bluetooth und/oder mittels übermittelter GPS-Daten von dem weiteren Kraftfahrzeug 12 für die Ladestation 3 bereitgestellt werden. Hierbei kann die Chipkarte dazu eingerichtet sein, dass diese das Ladebereitschaftssignal für die Ladestation 3 bereitstellt, sobald das Kraftfahrzeug 12 innerhalb des vorgegebenen Höchstabstands zur Ladestation 3 angeordnet ist.

Mittels der Ausgabeeinrichtung 11 kann über das wenigstens eine Leuchtelement 10 und/oder mittels einer nicht dargestellten Bildschirmeinrichtung kann das Zeitintervall der Reservierung mittels der Ladestation 3 ausgegeben werden. Hierdurch können sich in einem Umfeld der Ladestation 3 befindende Personen über das Zeitintervall der Reservierung informiert werden. Alternativ oder zusätzlich kann mittels der Ladestation 3 das Zeitintervall der Reservierung für wenigstens ein Kraftfahrzeug bereitgestellt werden, um das Kraftfahrzeug über das Zeitintervall der Reservierung zu informieren. In Abhängigkeit von dem ausgegebenen Zeitintervall der Reservierung können somit infolge des Informierens die Person und/oder das Kraftfahrzeug die Ladestation 3 in Abhängigkeit von dem Zeitintervall der Reservierung auswählen.

Vorliegend wird die Reservierung mittels eines Navigationssystems des weiteren Kraftfahrzeugs 12 getätigt, wobei das Navigationssystem sowohl einen Startzeitpunkt der Reservierung als auch ein Zeitintervall der Reservierung ermittelt und für die Ladestation 3 bereitstellt. Hierbei kann das Navigationssystem sowohl den Startzeitpunkt der Reservierung als auch das Zeitintervall der Reservierung in Abhängigkeit von einem Standort des weiteren Kraftfahrzeugs 12 und/oder in Abhängigkeit von einer geplanten Fahrtroute des weiteren Kraftfahrzeugs 12 ermitteln. Alternativ oder zusätzlich kann das Navigationssystem den Startzeitpunkt der Reservierung und/oder das Zeitintervall der Reservierung in Abhängigkeit von einer Benutzereingabe eines Fahrzeuginsassen des weiteren Kraftfahrzeugs 12 ermitteln.

Zum Durchführen des Entriegelns kann die Ladestation 3 einen das Entriegeln charakterisierenden Entriegelungsbefehl für das Kraftfahrzeug 2 bereitstellen. Das Kraftfahrzeug 2 entriegelt die mechanische Verbindung, sobald das Kraftfahrzeug 2 den Entriegelungsbefehl von der Ladestation empfängt. Somit kann das Kraftfahrzeug 2 sowohl die mechanische Verbindung verriegeln als auch die mechanische Verbindung entriegeln, wobei das Verriegeln bzw. das Entriegeln mittels der Ladestation 3 steuerbar ist. Ein das Entriegeln charakterisierendes Entriegelungssignal kann von der Ladestation 3 für das Kraftfahrzeug 2 bereitgestellt werden, sodass mittels des Kraftfahrzeugs 2 der Fahrer des Kraftfahrzeugs 2 über das Entriegeln der mechanischen Verbindung informierbar ist. Hierdurch kann ermöglicht werden, dass der Fahrer des Kraftfahrzeugs 2 jederzeit weiß, ob das Kraftfahrzeug 2 mit der Ladestation 3 verriegelt ist oder ob das Kraftfahrzeug 2 von der Ladestation 3 entriegelt ist.

Sind sowohl das Kraftfahrzeug 2 als auch das weitere Kraftfahrzeug 12 über jeweilige Ladeanschlüsse der Ladesäule 3 mit der Ladestation 3 verbunden, sodass sowohl das Kraftfahrzeug 2 als auch das weitere Kraftfahrzeug 12 mittels der Ladestation 3 bis zu einem jeweiligen vorgegebenen Ladezustand geladen werden können, so kann mittels der Ladestation 3 eine Entladeleistung der jeweiligen mit den Kraftfahrzeugen 2, 12 verbundenen Ladeanschlüsse der Ladestation 3 in Abhängigkeit von einem jeweiligen Ladezustand der Kraftfahrzeuge 2, 12 eingestellt werden. Dies bedeutet, dass eine Aufladeleistung des weiteren Kraftfahrzeugs 12, mit welcher das weitere Kraftfahrzeug 12 von der Ladestation 3 mit elektrischer Energie versorgt wird, in Abhängigkeit von einem Ladezustand des Kraftfahrzeugs 2 einstellbar ist. Liegt der Ladezustand des Kraftfahrzeugs 2 unterhalb eines vorgegebenen Ladezustands für das Kraftfahrzeug 2, so wird das weitere Kraftfahrzeug 12 mit einer ersten Aufladeleistung mit elektrischer Energie von der Ladestation 3 versorgt. Entspricht ein Ladezustand des Kraftfahrzeugs 2 dem vorgegebenen Ladezustand oder lieg der Ladezustand des Kraftfahrzeugs 2 über dem vorgegebenen Ladezustand, so wird das weitere Kraftfahrzeug 12 mit einer zweiten Aufladeleistung von der Ladestation 3 mit elektrischer Energie versorgt. Hierbei kann die zweite Aufladeleistung größer sein als die erste Aufladeleistung. Insbesondere kann eine maximale Entladeleistung der Ladestation 3 ermittelt werden und in Abhängigkeit von einer jeweiligen maximalen Aufladeleistung des Kraftfahrzeugs 2 und des weiteren Kraftfahrzeugs 12 die Entladeleistung der Ladestation 3 auf die Kraftfahrzeuge 2, 12 aufgeteilt werden. Hierbei kann die Aufladeleistung des Kraftfahrzeugs 2 bei Erreichen des vorgegebenen Ladezustands des Kraftfahrzeugs 2 auf null gesenkt werden. Des Weiteren kann bei Erreichen des vorgegebenen Ladezustand des Kraftfahrzeugs 2 die dem Kraftfahrzeug 2 zum Erreichen des vorgegebenen Ladezustands vorher bereitgestellte Entladeleistung dem weiteren Kraftfahrzeug 12 zur Verfügung gestellt werden. Somit können die Kraftfahrzeuge 2, 12 insbesondere in Abhängigkeit von einer Reihenfolge eines Verbindens der jeweiligen Kraftfahrzeuge 2, 12 mit der Ladestation 3 nacheinander bis zu ihrem jeweiligen vorgegebenen Ladezustand geladen werden.

Dem beschriebenen Verfahren liegt die Erkenntnis zugrunde, dass bei der Nutzung einer Ladesäule für ein Elektroauto herkömmlicherweise ein Stecker eines Ladekabels der in das Elektroauto gesteckt wird erst entriegelt wird, wenn ein Besitzer des Elektroautos das Elektroauto aufschließt. Als Hospitality Funktion kann der Besitzer des Elektroautos derzeit über eine App auf seinem Smartphone einen aktuellen Ladestand seines Elektroautos abrufen und den Stecker des Ladekabels aktiv entriegeln und somit für andere Benutzer freigeben.

Bei dem im Zusammenhang mit der einzigen Fig. beschriebenen Verfahren wird eine automatische Entriegelung eingesetzt, welche das Ladekabel 5 beziehungsweise die mechanische Verbindung zwischen dem Kraftfahrzeug 2 und der Ladestation 3 entriegelt, sobald das Kraftfahrzeug 2 vollständig aufgeladen ist. Wenn diese Entriegelung erfolgt ist, bekommt die Ladestation 3 ein Signal, vorliegend das Entriegelungssignal, welches charakterisiert, dass das Kraftfahrzeug 2 die mechanische Verbindung entriegelt hat. Das Ladekabel 5 kann einenends den ladestationsseitigen Ladestecker 6 aufweisen, welcher in der fahrzeugseitigen Ladebuchse 7 eingesteckt ist, und andernends einen Ladestationsstecker aufweisen, welcher zum Verbinden mit der Ladestation 3 in einer Ladestationsbuchse der Ladestation 3 eingesteckt ist. Nach Entriegelung der mechanischen Verbindung steckt der ladestationsseitige Ladestecker 6 entriegelt in der fahrzeugseitigen Ladebuchse 7 und der Ladestationsstecker in der Ladestationsbuchse. Bei der mechanischen Verbindung zwischen dem Kraftfahrzeug 2 und der Ladestation 3 kann sowohl die Verbindung zwischen dem ladestationsseitigen Ladestecker 6 und der fahrzeugseitigen Ladebuchse 7 als auch die Verbindung zwischen dem Ladestationsstecker und der Ladestationsbuchse verriegelt sein und im Rahmen der automatischen Entriegelung können beide Verbindungen oder lediglich eine der Verriegelungen entriegelt werden. Nach Empfangen des Entriegelungssignals signalisiert die Ladestation 3 anderen Elektroautofahrern, dass die Ladestation 3 frei ist und der ladestationsseitige Ladestecker 6 von dem geparkten beziehungsweise gesteckten Kraftfahrzeug 2 abgezogen werden kann. Somit kann die Ladestation 3 von mehreren Elektroautos genutzt werden, sofern genügend Stellplätze in einem Verbindungsbereich um die Ladestation 3 zur Verfügung stehen. Überdies kann die Ladestation 3 hierdurch nicht von einem Elektroauto blockiert werden.

Das Elektroauto beziehungsweise das Kraftfahrzeug 2 könnte die Zeit, die es zur vollständigen Aufladung der Batterie 4 noch braucht, an die Ladestation 3 übermitteln. Mit dieser die Zeit charakterisierenden Information könnten andere Elektroautofahrer nachsehen, wann die Ladestation 3 frei wird.

Das Kraftfahrzeug 2 entscheidet anhand des Ladezustands der Batterie 4, wann die automatische Entriegelung erfolgt. Das Kraftfahrzeug 2 ist somit nicht auf ein Signal des Dritten oder des Fahrers des Kraftfahrzeugs 2 angewiesen. Es wird dadurch voraussichtlich keine neue Hardware im Kraftfahrzeug 2 oder an der Ladestation 3, welche vorliegend als Ladesäule ausgebildet ist, benötigt. Des Weiteren gibt das Kraftfahrzeug 2 das Entriegelungssignal an die Ladestation 3 weiter, wenn die automatische Entriegelung erfolgt ist. Wenn die automatische Entriegelung noch nicht erfolgt ist, kann das Kraftfahrzeug 2 die Information, welche charakterisiert, wie lange das Kraftfahrzeug 2 noch benötigt, bis es den vorgegebenen beziehungsweise gewünschten Ladezustand erreicht hat und somit entriegelt werden kann, charakterisiert. Andere Elektroautofahrer können durch ein Signal an der Ladestation 3 beziehungsweise auf der App sehen, dass das Kraftfahrzeug 2 gerade an der Ladestation 3 angeschlossen ist und ob beziehungsweise wann der ladestationsseitige Ladestecker 6 von dem geparkten Kraftfahrzeug 2 abgezogen und bei dem weiteren Kraftfahrzeug 12 eingesteckt werden kann. Dies setzt entsprechend viele Parkplätze neben der Ladestation 3 voraus.

Im Folgenden wird eine spezielle Anwendungssituation erläutert: An der Ladestation 3, welche vorliegend als Schnellladestation mit Ladekabel 5 ausgebildet ist, sind zwei Parkplätze angeordnet. Das Kraftfahrzeug 2 soll an dieser Schnellladestation mit elektrischer Energie aufgetankt werden. Der Fahrer des Kraftfahrzeugs 2 steckt den über das Ladekabel 5 mit der Ladestation 3 verbundenen ladestationsseitigen Ladestecker 6 in die fahrzeugseitige Ladebuchse 7 des Kraftfahrzeugs 2 und geht in einem Shopping Center shoppen oder zum Essen in eine Raststation einer Autobahn oder zum Einkaufen in einen Supermarkt et cetera. Der Ladevorgang der Batterie 4 bis zu dem vorgegebenen Ladezustand ist nach 20 Minuten abgeschlossen. Der Fahrer benötigt allerdings 30 Minuten oder länger zum Shoppen beziehungsweise zum Essen beziehungsweise zum Einkaufen. Nach Abschluss des Ladevorgangs würde das Kraftfahrzeug 2 nach aktuellem Stand der Technik die Ladestation 3 belegen, obwohl es nicht mehr geladen wird. Bei dem Verfahren zum automatischen Entriegeln der Ladeanordnung 1 können während des Ladevorgangs andere Elektroautofahrer insbesondere über die App nachsehen, wie lange das mit der Ladestation 3 verbundene Kraftfahrzeug 2 noch benötigt, bis dessen Batterie 4 den vorgegebenen Ladezustand erreicht hat und das Kraftfahrzeug 2 die Ladestation 3 für das nächste Elektroauto beziehungsweise das weitere Kraftfahrzeug 12 freigibt. Nach Freigabe des ladestationsseitigen Ladesteckers 6 mittels des Kraftfahrzeugs 2 kann das an einem der Ladestation 3 zugeordneten Parkplatz abgestellte weitere Kraftfahrzeug 12 mittels der Ladestation 3 geladen werden, indem der ladestationsseitige Ladestecker 6 aus der fahrzeugseitigen Ladebuchse 7 des Kraftfahrzeugs 2 herausgezogen wird und mit dem weiteren Kraftfahrzeug 12 verbunden wird.

Um zu gewährleisten, dass die Ladestation 3 im reservierten Zeitintervall für das die Reservierung aufweisende weitere Kraftfahrzeug 12 frei ist und nicht von dem Kraftfahrzeug 2 blockiert wird, kann die Ladestation 3 für das Zeitintervall der Reservierung für das Kraftfahrzeug 2 gesperrt werden. Insbesondere kann bei Eintreffen des weiteren Kraftfahrzeugs 12, welches die gültige Reservierung aufweist, an der Ladestation 3 das Kraftfahrzeug 2, welches die Ladestation 3 ohne Reservierung besetzt, den Entriegelungsbefehl von der Ladestation 3 empfangen, wobei der Entriegelungsbefehl charakterisiert, dass die mechanische Verbindung zu entriegeln ist. Wenn die Entriegelung erfolgt ist, kann die Ladestation 3 anzeigen, dass die mechanische Verbindung entriegelt worden ist und das Ladekabel 5 von dem Kraftfahrzeug 2 abgezogen und mit dem weiteren Kraftfahrzeug 12, welches die gültige Reservierung aufweist, verbunden werden kann. Hierbei ist es vorteilhaft, wenn ein freier Parkplatz für das weitere Kraftfahrzeug 12 in Kabelreichweite und somit innerhalb des vorgegebenen, durch das Ladekabel 5 definierten Höchstabstands zu der Ladestation 3 frei ist. Dieses Verfahren ermöglicht, dass eine Auslastung der Ladestation besonders groß gehalten werden kann und ein Risiko, dass das Kraftfahrzeug 2 die Ladestation 3 besetzt, besonders gering gehalten werden kann. Ein mögliches Szenario könnte insbesondere derart ablaufen, dass im Urlaubsverkehr der Fahrer des weiteren Kraftfahrzeugs 12 die Ladestation 3, bei welcher es sich insbesondere um eine einer Autobahn zugeordnete Schnellladesäule handelt, um 14 Uhr für einen Zeitraum von 16 Uhr bis 16.30 Uhr reserviert. Die Möglichkeit zur Reservierung könnte insbesondere in das Navigationssystem eingearbeitet sein. Vorliegend verfügt die reservierte Ladestation 3 über zwei Ladekabel 5 und zwei Parkplätze. Eine maximale Parkdauer an der Ladestation 3 könnte 45 min betragen. An einem Parkplatz der Ladestation 3 kann insbesondere eine Stunde vor dem Zeitintervall der Reservierung auf einer Anzeige der Ladestation 3 signalisiert werden, dass dieser Parkplatz lediglich von dem die gültige Reservierung aufweisenden weiteren Kraftfahrzeug 12 zu nutzen ist. Um 15.45 Uhr fährt das Kraftfahrzeug 2, welches die gültige Reservierung nicht aufweist, auf den nicht reservierten Parkplatz an der Ladestation 3, welche signalisiert, wann sie reserviert ist. Hierbei kann der Fahrer des Kraftfahrzeugs 2 die Information erhalten, dass die Aufladung des Kraftfahrzeugs 2 ab 16 Uhr beziehungsweise bei einem Eintreffen des die Reservierung aufweisenden Kraftfahrzeugs 12 abgebrochen wird. Der Fahrer des Kraftfahrzeugs 2 kann in einem Autobahnrestaurant zum Essen gehen und erst um 16.30 Uhr wieder zurück zum Kraftfahrzeug 2 kommen. Um 16.10 trifft das die gültige Reservierung aufweisende weitere Kraftfahrzeug 12 an der Ladestation 3 ein und fährt auf den für es reservierten Parkplatz. Das weitere Kraftfahrzeug 12 beziehungsweise der Fahrer des weiteren Kraftfahrzeugs 12 kann sich gegenüber der Ladestation 3 mittels einer Ladechipkarte beziehungsweise mittels GPS- und/oder Bluetooth-Daten des weiteren Kraftfahrzeugs 12 und/oder mittels des Mobiltelefons identifizieren. Die Ladestation 3 erkennt, dass das die gültige Reservierung aufweisende weitere Kraftfahrzeug 12 innerhalb des definierten Höchstabstands angekommen ist und stellt für das Kraftfahrzeug 2 das Entriegelungssignal bereit, welches charakterisiert, dass das Ladekabel 5 zu entriegeln ist. Das Kraftfahrzeug 2 kann das Ladekabel 5 entriegeln und über ein Signal die Ladestation 3 über die Entriegelung informieren. Die Ladestation 3 kann dem Fahrer des weiteren Kraftfahrzeugs 12 signalisieren, dass das Ladekabel 5 vom Kraftfahrzeug 2 abgesteckt und in das weitere Kraftfahrzeug 12 eingesteckt werden kann. Dieses Verfahren ermöglicht, dass Kapazitäten der Ladestation 3 optimal ausgelastet werden können und die Ladestation 3 somit für Betreiber besonders rentabel ist. Darüber hinaus können Fahrer von Kraftfahrzeugen eine jeweilige Aufladung der Kraftfahrzeuge 2, 12 rechtzeitig planen und insbesondere während Stoßzeiten und/oder Urlaubszeiten lange Wartezeiten an der Ladestation 3 vermeiden.

Um zu vermeiden, dass das weitere Kraftfahrzeug 12 erst dann geladen werden kann, wenn das Ladekabel 5 am Kraftfahrzeug 2 und/oder an der Ladestation 3 entriegelt worden ist, kann eine in der einzigen Fig. nicht dargestellte Umschalteinrichtung an der Ladestation 3 angeordnet werden sowie wenigstens ein weiteres Ladekabel 5 mit Ladesteckern 6. Nach beziehungsweise während eines Ladevorgangs des Kraftfahrzeugs 2 kann das weitere Kraftfahrzeug 12 mittels des wenigstens einen weiteren Ladekabels 5 beziehungsweise Ladesteckers 6 mit der Ladestation 3 verbunden werden. Eine Umleitung einer Ladeenergie auf das zweite Ladekabel 5 beziehungsweise den zweiten Ladestecker 6 könnte nach abgeschlossener Aufladung des Kraftfahrzeugs 2 erfolgen. Hierdurch kann eine Kapazität der Ladestation 3 optimal genutzt werden. Im Folgenden wird ein konkretes Anwendungsbeispiel des Verfahrens erläutert. An der Ladestation 3 in einer Innenstadt kann es vier Parkplätze geben, die um die Ladestation 3 angeordnet sind. Die Ladestation 3 kann über vier Typ2-Steckdosen beziehungsweise über vier Ladekabel 5 mit jeweiligen Ladesteckern 6 verfügen. Um 18 Uhr kann ein erstes Kraftfahrzeug an der Ladestation 3 ankommen und mit der Ladestation 3 mechanisch verbunden werden. Dieses erste Kraftfahrzeug kann der Ladestation 3 ein Signal schicken, welches charakterisiert, wie lange ein Ladevorgang des ersten Kraftfahrzeugs bis zum gewünschten Ladezustand benötigt. Die Ladestation 3 kann die Zeit, die das angesteckte erste Kraftfahrzeug bis zum gewünschten Ladezustand benötigt, über ein Display und/oder über eine App ausgeben. Um 18.15 Uhr kann ein zweites Kraftfahrzeug an der Ladestation 3 ankommen und mit der Ladestation 3 mechanisch verriegelt werden. Die Ladestation 3 kann dem Fahrer des zweiten Kraftfahrzeugs signalisieren, dass die Ladestation 3 erst um 20 Uhr auf die mechanische Verbindung zu dem zweiten Kraftfahrzeug umschalten wird und somit das zweite Kraftfahrzeug erst ab 20 Uhr laden wird. Die Ladestation 3 kann die Zeit, die das angesteckte zweite Kraftfahrzeug bis zu seinem gewünschten Ladezustand benötigt, über das Display und/oder über die App ausgeben. Um 18.30 Uhr kann ein drittes Kraftfahrzeug an der Ladestation 3 ankommen, wobei das Verfahren analog zum zweiten Kraftfahrzeug abläuft. Insbesondere können am nächsten Tag bis zu vier auf den Parkplätzen der Ladestation 3 geparkte Kraftfahrzeuge mittels der einen Ladestation 3 deren jeweiligen gewünschten Ladezustand erreichen.

Falls die Ladestation 3 über eine größere Entladeleistung verfügt als das angesteckte Kraftfahrzeug 2 in Form der Aufladeleistung empfangen kann, kann das angesteckte Kraftfahrzeug 2 lediglich mit der maximal möglichen Aufladeleistung des angesteckten Kraftfahrzeugs 2 geladen werden. Hierbei kann die Ladestation 3 nicht deren volle Entladeleistung abrufen, was zu Wartezeiten führen kann. Um dies zu vermeiden, kann mittels der Umschalteinrichtung zwischen dem Kraftfahrzeug 2 und dem weiteren Kraftfahrzeug 12 die Entladeleistung der Ladestation 2 aufgeteilt werden. Im Folgenden wird auch hierzu ein konkretes Ausführungsbeispiel erläutert. An der Ladestation 3, welche eine Entladeleistung von 22 kW aufweist, wird das Kraftfahrzeug 2 angesteckt, welches eine Aufladeleistung von 11kW aufweist. Die Ladestation 3 kann eine Zeit, die das angesteckte Kraftfahrzeug 2 bis zum gewünschten Ladezustand benötigt, und zusätzlich eine verbleibende Entladeleistung der Ladestation 3 über ein Display und/oder über eine App ausgeben. Anschließend kann das weitere Kraftfahrzeug 12 an die Ladestation 3 heranfahren und mechanisch mit der Ladestation 3 verbunden werden. Das weitere Kraftfahrzeug 12 kann mit einer Aufladeleistung von 11 kW, welche der Restentladeleistung der Ladestation 3 entspricht, geladen werden, bis das Kraftfahrzeug 2 dessen gewünschten Ladezustand erreicht hat. Hat das Kraftfahrzeug 2 dessen gewünschten Ladezustand erreicht, dann steht dem weiteren Kraftfahrzeug 12 die volle Entladeleistung von 22 kW der Ladestation 3 zur Verfügung.

Insgesamt zeigen die Beispiele, wie durch die Erfindung eine automatische Entriegelung einer ein Kraftfahrzeug und eine Ladestation umfassenden Ladeanordnung geschaffen werden kann.

## Patentansprüche

1. Verfahren zum automatischen Entriegeln einer Ladeanordnung (1), bei welcher ein elektrisch antreibbares Kraftfahrzeug (2) mit einer Ladestation (3) verbunden ist, mit den Schritten:
- Automatisches Entriegeln einer mechanischen Verbindung zwischen der Ladestation (3) und dem Kraftfahrzeug (2), sobald ein vorgegebener Ladezustand bei einer Batterie (4) des Kraftfahrzeugs (2) erreicht worden ist;
- Generieren eines Entriegelungssignals mittels des Kraftfahrzeugs (2), sobald die mechanische Verbindung entriegelt worden ist;
- Übertragen des generierten Entriegelungssignals an die Ladestation (3), welche infolgedessen signalisiert, dass die Ladestation (3) frei ist;
**dadurch gekennzeichnet, dass**
vor Erreichen des vorgegebenen Ladezustands die mechanische Verbindung zwischen der Ladestation (3) und dem Kraftfahrzeug (2) automatisch entriegelt wird, sobald ein Zeitintervall einer gültigen Reservierung eines weiteren Kraftfahrzeugs läuft und die mechanische Verbindung erst dann automatisch entriegelt wird, wenn zusätzlich zu dem laufenden Zeitintervall der Reservierung ein Ladebereitschaftssignal des weiteren Kraftfahrzeugs vorliegt, welches eine Bereitschaft des weiteren Kraftfahrzeugs charakterisiert, elektrische Energie von der Ladestation zu empfangen.

2. Verfahren nach Anspruch 1,
**dadurch gekennzeichnet, dass**
das Zeitintervall und/oder das Ladebereitschaftssignal mittels einer Chipkarte und/oder mittels eines Mobiltelefons und/oder mittels Bluetooth und/oder mittels übermittelter GPS-Daten von dem weiteren Kraftfahrzeug bereitgestellt wird.

3. Verfahren nach Anspruch 1 oder 2,
**dadurch gekennzeichnet, dass**
die Ladestation (3) ein das automatische Entriegeln charakterisierendes Entriegelungssignal zum Informieren des Fahrers des Kraftfahrzeugs (2) für das Kraftfahrzeug (2) bereitstellt.

4. Verfahren nach einem der vorhergehenden Ansprüche,
**dadurch gekennzeichnet, dass**
die Ladestation (3) einen das Entriegeln charakterisierenden Entriegelungsbefehl für das Kraftfahrzeug (2) bereitstellt und das Kraftfahrzeug (2) die mechanische Verbindung entriegelt, sobald das Kraftfahrzeug (2) den Entriegelungsbefehl empfängt.

5. Verfahren nach einem der vorhergehenden Ansprüche,
**dadurch gekennzeichnet, dass**
die Ladestation das Zeitintervall der Reservierung signalisiert.

6. Verfahren nach einem der vorhergehenden Ansprüche,
**dadurch gekennzeichnet, dass**
ein Zeitintervall und/oder ein Startzeitpunkt der Reservierung von einem Navigationssystem des weiteren Kraftfahrzeugs ermittelt wird und die Reservierung mittels des Navigationssystems durchgeführt wird.

7. Verfahren nach einem der vorhergehenden Ansprüche,
**dadurch gekennzeichnet, dass**
mittels der Ladestation das Kraftfahrzeug und wenigstens ein weiteres Kraftfahrzeug über jeweilige Ladeanschlüsse der Ladestation bis zu einem jeweiligen vorgegebenen Ladezustand aufgeladen werden, wobei mittels der Ladestation eine Ladeleistung des wenigstens einen mit dem weiteren Kraftfahrzeug verbundenen Ladeanschlusses verändert wird, sobald das Kraftfahrzeug den vorgegebenen Ladezustand aufweist.

8. Verfahren nach Anspruch 7,
**dadurch gekennzeichnet, dass**
die Ladeleistung des wenigstens einen mit dem weiteren Kraftfahrzeug verbundenen Ladeanschlusses null beträgt, solange ein Ladezustand des Kraftfahrzeugs unter dem vorgegebenen Ladezustand liegt.

9. Verfahren nach Anspruch 7,
**dadurch gekennzeichnet, dass**
eine maximale Ladeleistung der Ladestation ermittelt wird und in Abhängigkeit davon, wie viel von der Ladeleistung das Kraftfahrzeug und das wenigstens eine weitere Kraftfahrzeug bereit sind zu empfangen, die Ladeleistung auf die Ladeanschlüsse der Ladestation aufgeteilt wird.

10. Verfahren nach einem der vorhergehenden Ansprüche,
**dadurch gekennzeichnet, dass**
beim automatischen Entriegeln
- entweder ein fahrzeugseitiger Ladestecker, der in eine Ladebuche der Ladestation eingesteckt und mit dieser verriegelt ist, entriegelt wird;
- oder ein ladestationsseitiger Ladestecker (6), der in eine fahrzeugseitige Ladebuchse (7) eingesteckt und mit dieser verriegelt ist, entriegelt wird.

11. Verfahren nach einem der vorhergehenden Ansprüche,
**dadurch gekennzeichnet, dass**
der vorgegebene Ladezustand in Abhängigkeit von einer Benutzervorgabe vorgegeben wird.

12. Verfahren nach einem der Ansprüche 1 bis 10,
**dadurch gekennzeichnet, dass**
der vorgegebene Ladezustand ein voll geladener Zustand der Batterie (4) ist.

13. Verfahren nach einem der vorhergehenden Ansprüche,
**dadurch gekennzeichnet, dass**
die Ladestation (3) mittels einer Ausgabeeinrichtung (11) signalisiert, dass die Ladestation (3) frei ist.

14. Verfahren nach einem der vorhergehenden Ansprüche,
**dadurch gekennzeichnet, dass**
die Ladestation (3) das Entriegelungssignal an eine Servereinrichtung überträgt, welche das Entriegelungssignal an eine App überträgt, welche infolgedessen signalisiert, dass die Ladestation (3) frei ist.

15. Verfahren nach einem der vorhergehenden Ansprüche,
**dadurch gekennzeichnet, dass**
das Kraftfahrzeug (2) ein Ladezustandssignal, welches einen Ladezustand der Batterie (4) charakterisiert, an die Ladestation (3) überträgt, wobei die Ladestation (3) in Abhängigkeit von dem Ladezustandssignal eine Restladezeit der Batterie (4) bis zu dem vorgegebenen Ladezustand ermittelt.

16. Verfahren nach Anspruch 15,
**dadurch gekennzeichnet, dass**
die Ladestation (3) mittels einer Ausgabeeinrichtung (11) die Restladezeit der Batterie (4) anzeigt.

17. Verfahren nach einem der Ansprüche 15 oder 16,
**dadurch gekennzeichnet, dass**
die Ladestation (3) die Restladezeit der Batterie (4) an eine Servereinrichtung überträgt, welche die Restladezeit der Batterie (4) an eine App überträgt, welche infolgedessen die Restladezeit der Batterie (4) ausgibt.

18. Kraftfahrzeug (2), welches elektrisch antreibbar ist und welches dazu eingerichtet ist,
- mit einer Ladestation (3) verbunden zu werden;
- eine mechanische Verbindung zwischen der Ladestation (3) und dem Kraftfahrzeug (2) automatisch zu entriegeln, sobald ein vorgegebener Ladezustand bei einer Batterie (4) des Kraftfahrzeugs (2) erreicht worden ist;
- ein Entriegelungssignal zu generieren, sobald die mechanische Verbindung entriegelt worden ist; und
- das generierte Entriegelungssignal an die Ladestation (3) zu übertragen, welche infolgedessen signalisiert, dass die Ladestation (3) frei ist,
wobei das Kraftfahrzeug dazu eingerichtet ist,
vor Erreichen des vorgegebenen Ladezustands die mechanische Verbindung zwischen der Ladestation (3) und dem Kraftfahrzeug (2) automatisch zu entriegeln, sobald ein Zeitintervall einer gültigen Reservierung eines weiteren Kraftfahrzeugs läuft und die mechanische Verbindung erst dann automatisch zu entriegeln, wenn zusätzlich zu dem laufenden Zeitintervall der Reservierung ein Ladebereitschaftssignal des weiteren Kraftfahrzeugs vorliegt, welches eine Bereitschaft des weiteren Kraftfahrzeugs charakterisiert, elektrische Energie von der Ladestation zu empfangen.

## Claims

1. Method for automatically unlocking a charging arrangement (1), wherein an electrically powered motor vehicle (2) is connected to a charging station (3), comprising the steps of:
- automatically unlocking a mechanical connection between the charging station (3) and the motor vehicle (2) as soon as a predetermined charge state of a battery (4) of the motor vehicle (2) has been reached,
- generating an unlocking signal by means of the motor vehicle (2) as soon as the mechanical connection has been unlocked,
- transmitting the unlocking signal generated to the charging station (3), which, as a result, signals that the charging station (3) is free,
**characterised in that**
before the predetermined charge state is reached, the mechanical connection between the charging station (3) and the motor vehicle (2) is automatically unlocked as soon as a time period of a valid reservation for a further motor vehicle is running and the mechanical connection is then only automatically unlocked if, in addition to the running time period of the reservation, a ready-to-charge signal for the further motor vehicle is present, which characterises a readiness of the further motor vehicle to receive electrical energy from the charging station.

2. Method according to claim 1,
**characterised in that**
the time period and/or the ready-to-charge signal is provided by means of a chip card and/or by means of a mobile telephone and/or by means of Bluetooth and/or by means of transmitted GPS data by the further motor vehicle.

3. Method according to claim 1 or 2,
**characterised in that**
the charging station (3) provides an unlocking signal for the motor vehicle (2), which characterises automatic unlocking, in order to inform the driver of the motor vehicle (2).

4. Method according to any of the preceding claims,
**characterised in that**
the charging station (3) provides an unlocking command for the motor vehicle (2), which characterises unlocking, and the motor vehicle (2) unlocks the mechanical connection as soon as the motor vehicle (2) receives the unlocking command.

5. Method according to any of the preceding claims,
**characterised in that**
the charging station signals the time period of the reservation.

6. Method according to any of the preceding claims,
**characterised in that**
a time period and/or a start time of the reservation is determined by a navigation system of the further motor vehicle and the reservation is carried out by means of the navigation system.

7. Method according to any of the preceding claims,
**characterised in that**
by means of the charging station, the motor vehicle and at least one further motor vehicle are charged via respective charging connections of the charging station up to a respective predetermined charge state, wherein, by means of the charging station, a charging power of the at least one charging connection connected to the further motor vehicle is changed as soon as the motor vehicle has the predetermined charge state.

8. Method according to claim 7,
**characterised in that**
the charging power of the at least one charging connection connected to the further motor vehicle is zero as long as a charge state of the motor vehicle is below the predetermined charge state.

9. Method according to claim 7,
**characterised in that**
a maximum charging power of the charging station is determined and, depending on how much of the charging power the motor vehicle and the at least one further motor vehicle are ready to receive, the charging power is distributed to the charging connections of the charging station.

10. Method according to any of the preceding claims,
**characterised in that**
on automatic unlocking
- either a vehicle-side charging plug, which is inserted into a charging socket of the charging station and is locked to it, is unlocked,
- or a charging station-side charging plug (6), which is inserted into a vehicle-side charging socket (7) and is locked to it, is unlocked.

11. Method according to any of the preceding claims,
**characterised in that**
the predetermined charge state is predetermined on the basis of a user input.

12. Method according to any of claims 1 to 10,
**characterised in that**
the predetermined charge state is a fully charged state of the battery (4).

13. Method according to any of the preceding claims,
**characterised in that**
the charging station (3) signals that the charging station (3) is free by means of an output device (11).

14. Method according to any of the preceding claims,
**characterised in that**
the charging station (3) transmits the unlocking signal to a server device, which transmits the unlocking signal to an App, which, as a result, signals that the charging station (3) is free.

15. Method according to any of the preceding claims,
**characterised in that**
the motor vehicle (2) transmits a charge state signal, which characterises a charge state of the battery (4), to the charging station (3), wherein the charging station (3) determines a remaining charging time for the battery (4) up to the predetermined charge state, on the basis of the charge state signal.

16. Method according to claim 15,
**characterised in that**
the charging station (3) displays the remaining charging time for the battery (4) by means of an output device (11).

17. Method according to any of claims 15 or 16,
**characterised in that**
the charging station (3) transmits the remaining charging time for the battery (4) to a server device, which transmits the remaining charging time for the battery (4) to an App, which, as a result, outputs the remaining charging time for the battery (4).

18. Motor vehicle (2), which can be electrically powered and is configured,
- to be connected to a charging station (3),
- to automatically unlock a mechanical connection between the charging station (3) and the motor vehicle (2) as soon as a predetermined charge state of a battery (4) of the motor vehicle (2) has been reached,
- to generate an unlocking signal as soon as the mechanical connection has been unlocked, and
- to transmit the unlocking signal generated to the charging station (3), which, as a result, signals that the charging station (3) is free,
wherein the motor vehicle is configured,
before the predetermined charge state is reached, to automatically unlock the mechanical connection between the charging station (3) and the motor vehicle (2) as soon as a time period of a valid reservation of a further motor vehicle is running and to then only automatically unlock the mechanical connection if, in addition to the running time period of the reservation, a ready-to-charge signal for the further motor vehicle is present, which characterises a readiness of the further motor vehicle to receive electrical energy from the charging station.

## Revendications

1. Procédé de déverrouillage automatique d'un agencement de recharge (1), pour lequel un véhicule automobile (2) entraînable par voie électrique est relié à une station de recharge (3), avec les étapes de :
- déverrouillage automatique d'une liaison mécanique entre la station de recharge (3) et le véhicule automobile (2) dès qu'un état de recharge prédéfini a été atteint pour une batterie (4) du véhicule automobile (2) ;
- génération d'un signal de déverrouillage au moyen du véhicule automobile (2) dès que la liaison mécanique a été déverrouillée ;
- transmission du signal de déverrouillage généré à la station de recharge (3) qui signalise par conséquent que la station de recharge (3) est libre ;
**caractérisé en ce qu'**
avant l'atteinte de l'état de recharge prédéfini, la liaison mécanique entre la station de recharge (3) et le véhicule automobile (2) est automatiquement déverrouillée dès qu'un intervalle de temps d'une réservation valide d'un autre véhicule automobile s'écoule et la liaison mécanique est automatiquement déverrouillée seulement lorsqu'outre l'intervalle de temps s'écoulant de la réservation, un signal de la disposition de recharge de l'autre véhicule automobile se présente, lequel caractérise une disposition de l'autre véhicule automobile à recevoir de l'énergie électrique de la station de recharge.

2. Procédé selon la revendication 1,
**caractérisé en ce que**
l'intervalle de temps et/ou le signal de disposition de recharge est fourni au moyen d'une carte à puce et/ou au moyen d'un téléphone mobile et/ou au moyen du Bluetooth et/ou au moyen de données de GPS transmises de l'autre véhicule automobile.

3. Procédé selon la revendication 1 ou 2,
**caractérisé en ce que**
la station de recharge (3) fournit un signal de déverrouillage caractérisant le déverrouillage automatique destiné à informer le conducteur du véhicule automobile (2) pour le véhicule automobile (2).

4. Procédé selon l'une quelconque des revendications précédentes,
**caractérisé en ce que**
la station de recharge (3) fournit un ordre de déverrouillage caractérisant le déverrouillage pour le véhicule automobile (2) et le véhicule automobile (2) déverrouille la liaison mécanique dès que le véhicule automobile (2) reçoit l'ordre de déverrouillage.

5. Procédé selon l'une quelconque des revendications précédentes,
**caractérisé en ce que**
la station de recharge signalise l'intervalle de temps de la réservation.

6. Procédé selon l'une quelconque des revendications précédentes,
**caractérisé en ce qu'**
un intervalle de temps et/ou un moment de départ de la réservation est déterminé par un système de navigation de l'autre véhicule automobile et la réservation est réalisée au moyen du système de navigation.

7. Procédé selon l'une quelconque des revendications précédentes,
**caractérisé en ce qu'**
au moyen de la station de recharge le véhicule automobile et au moins un autre véhicule automobile sont rechargés par le biais de raccords de recharge respectifs de la station de recharge jusqu'à un état de recharge prédéfini respectif, dans lequel au moyen de la station de recharge une puissance de recharge d'au moins un raccord de recharge relié à l'autre véhicule automobile est modifiée dès que le véhicule automobile présente l'état de recharge prédéfini.

8. Procédé selon la revendication 7,
**caractérisé en ce que**
la puissance de recharge de l'au moins un raccord de recharge relié à l'autre véhicule automobile s'élève à zéro tant qu'un état de recharge du véhicule automobile se trouve sous l'état de recharge prédéfini.

9. Procédé selon la revendication 7,
**caractérisé en ce que**
une puissance de recharge maximale de la station de recharge est déterminée et en fonction de la quantité de la puissance de recharge que le véhicule automobile et l'au moins un autre véhicule automobile sont prêts à recevoir, la puissance de recharge est répartie aux raccords de recharge de la station de recharge.

10. Procédé selon l'une quelconque des revendications précédentes,
**caractérisé en ce que**
lors du déverrouillage automatique
- soit une fiche de recharge côté véhicule qui est enfichée dans une douille de recharge de la station de recharge et est verrouillée avec celle-ci, est déverrouillée ;
- soit une fiche de recharge (6) côté station de recharge qui est enfichée dans une douille de recharge (7) côté véhicule et est verrouillée avec celle-ci, est déverrouillée.

11. Procédé selon l'une quelconque des revendications précédentes,
**caractérisé en ce que**
l'état de recharge prédéfini est prédéfini en fonction d'une prescription utilisateur.

12. Procédé selon l'une quelconque des revendications 1 à 10,
**caractérisé en ce que**
l'état de recharge prédéfini est un état complètement chargé de la batterie (4).

13. Procédé selon l'une quelconque des revendications précédentes,
**caractérisé en ce que**
la station de recharge (3) signalise au moyen d'un dispositif de sortie (11) que la station de recharge (3) est libre.

14. Procédé selon l'une quelconque des revendications précédentes,
**caractérisé en ce que**
la station de recharge (3) transmet le signal de déverrouillage à un dispositif serveur qui transmet le signal de déverrouillage à une application qui signalise par conséquent que la station de recharge (3) est libre.

15. Procédé selon l'une quelconque des revendications précédentes,
**caractérisé en ce que**
le véhicule automobile (2) transmet un signal d'état de recharge qui caractérise un état de recharge de la batterie (4), à la station de recharge (3), dans lequel la station de recharge (3) détermine en fonction du signal d'état de recharge une durée de recharge restante de la batterie (4) jusqu'à l'état de recharge prédéfini.

16. Procédé selon la revendication 15,
**caractérisé en ce que**
la station de recharge (3) indique au moyen d'un dispositif de sortie (11) la durée de recharge restante de la batterie (4).

17. Procédé selon l'une quelconque des revendications 15 ou 16,
**caractérisé en ce que**
la station de recharge (3) transmet la durée de recharge restante de la batterie (4) à un dispositif serveur qui transmet la durée de recharge restante de la batterie (4) à une application qui émet par conséquent la durée de recharge restante de la batterie (4).

18. Véhicule automobile (2) qui est entraînable par voie électrique et qui est aménagé afin
- d'être relié à une station de recharge (3) ;
- de déverrouiller automatiquement une liaison mécanique entre la station de recharge (3) et le véhicule automobile (2) dès qu'un état de recharge prédéfini a été atteint pour une batterie (4) du véhicule automobile (2) ;
- de générer un signal de déverrouillage dès que la liaison mécanique a été déverrouillée ; et
- transmettre le signal de déverrouillage généré à la station de recharge (3) qui signalise par conséquent que la station de recharge (3) est libre,
dans lequel le véhicule automobile est aménagé afin de
déverrouiller automatiquement, avant l'atteinte de l'état de recharge prédéfini, la liaison mécanique entre la station de recharge (3) et le véhicule automobile (2) dès qu'un intervalle de temps d'une réservation valide d'un autre véhicule automobile s'écoule et de déverrouiller automatiquement la liaison mécanique seulement lorsqu'outre l'intervalle de temps s'écoulant de la réservation, un signal de disposition de recharge de l'autre véhicule automobile se présente, lequel caractérise une disposition de l'autre véhicule automobile à recevoir de l'énergie électrique de la station de recharge.
